(19) Europäisches Patentamt
European Patent Office
Office européen des brevets

(11) EP 2 013 327 B1

(12) **EUROPEAN PATENT SPECIFICATION**

(45) Date of publication and mention of the grant of the patent:
**20.05.2015 Bulletin 2015/21**

(21) Application number: **07758002.5**

(22) Date of filing: **06.03.2007**

(51) Int Cl.:
***C12C 3/00*** *(2006.01)* ***C12C 3/12*** *(2006.01)*

(86) International application number:
**PCT/US2007/063410**

(87) International publication number:
**WO 2007/130736 (15.11.2007 Gazette 2007/46)**

(54) **IMPROVEMENTS TO THE BITTERING OF BEER**

VERBESSERTER BITTERGESCHMACK FÜR BIER

AMÉLIORATIONS DU GOÛT AMER DE LA BIÈRE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **04.05.2006 US 381730**

(43) Date of publication of application:
**14.01.2009 Bulletin 2009/03**

(73) Proprietor: **S.S. STEINER, INC.**
**New York, NY 10021-8078 (US)**

(72) Inventors:
- **WILSON, Richard, J. H.**
  **Copthrone Sussex RH10 3EW (GB)**
- **SMITH, Robert, J.**
  **Yakima, Washington 98908 (US)**

(74) Representative: **Prinz & Partner mbB**
**Patent- und Rechtsanwälte**
**Rundfunkplatz 2**
**80335 München (DE)**

(56) References cited:
**WO-A-02/02732**
**WO-A-97/33971**
**GB-A- 1 156 519**
**US-A- 4 110 480**
**US-A1- 2003 041 737**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

This invention relates to improvements in products prepared from hop extracts and used in the bittering, foam improvement and light stabilising of beer, and also in the methods by which these products are used, particularly for the post-fermentation bittering of beer.

Amongst the many types of compounds present in hops that are useful to brewers is a class of resinous compounds known as α-acids. These compounds are primarily responsible for the bitterness of beer, being converted during wort boiling to their isomerized forms, known as iso-α-acids (Formula 1). The iso-α-acids are bitter and contribute also to the foam quality of the beer. Unfortunately, the conversion of α-acids to iso-α-acids in the wort kettle is rather inefficient and there are also subsequent losses of the iso-α-acids during the fermentation of the wort. Consequently, many brewers use preparations of iso-α-acids in forms that can readily be added to already fermented wort, thereby greatly increasing the utilisation of the original α-acids. These preparations can be efficiently manufactured from hop extracts, particularly from extracts prepared using liquid or supercritical carbon dioxide ($CO_2$), and provide an easy and cheap way for the brewer to control the bitterness of beer. Although other preparations have been described, the normal form in which these iso-α-acids are made commercially available is as an aqueous solution of the potassium salts, most commonly as a slightly alkaline solution containing 30% of actual iso-α-acids by weight (i.e. 300 g per kg) or weight/volume (i.e. 300 g per litre) of the iso-α-acids.

Subsequent to the introduction of iso-α-acids solutions for post-fermentation bittering, a range of products was developed in which the iso-α-acids were converted to different forms of chemically reduced derivatives. These derivatives are also bitter, but the degree of bitterness varies from that of the iso-α-acids. Differences are also apparent in their ability to promote and modify the characteristics of beer foam. The commercially available, reduced forms of iso-α-acids also have the further property of resisting the light-induced breakdown of the iso-α-acid molecule that is a key factor in the development of "lightstruck" or "skunky" flavors in beers exposed to sunlight or some forms of artificial light. Hence, these chemically reduced compounds are also often used as the sole bittering agents in the preparation of beers that are sold in clear glass bottles.

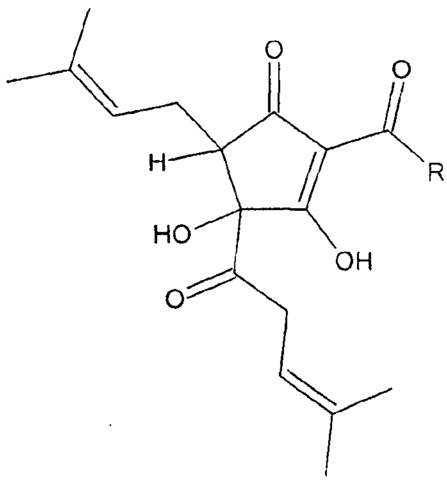

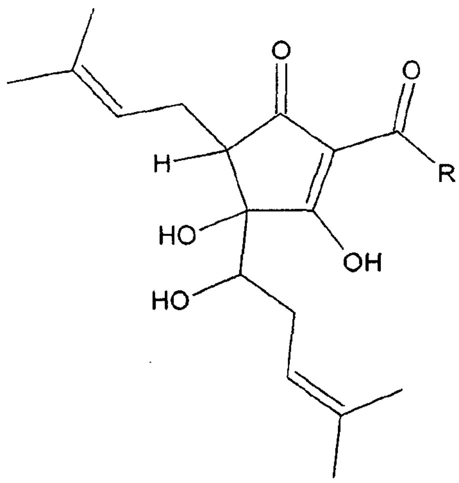

(1)

(2)

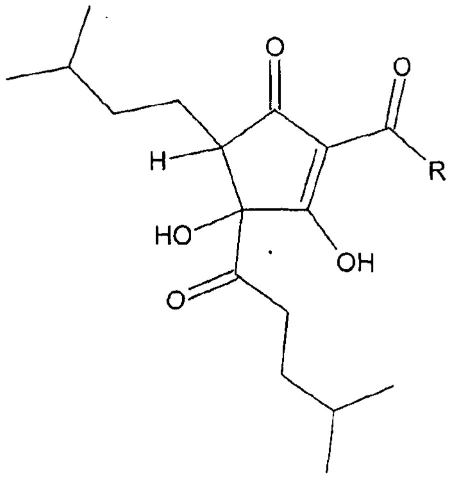

(4)

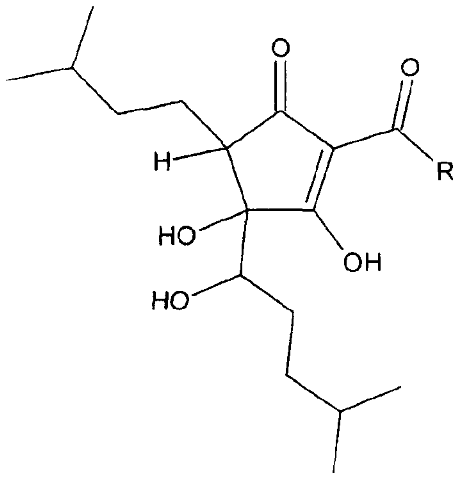

(3)

Three types of reduced iso-α-acids are commercially available. These are the p-iso-α-acids (alternatively written as *rho*-iso-α-acids, Formula 2), the tetrahydroiso-α-acids (Formula 3) and the hexahydroiso-α-acids (Formula 4). (See European Brewery Convention Manual of Good Practice: Hops and Hop Products (1997), publ. by Getränke-Fachverlag Hans Carl, Nürnberg). Many different methods for the preparation of these compounds have been described, but a common feature of the manufacture of p-iso-α-acids is that they are prepared via reduction of iso-α-acids with an alkali metal borohydride, normally sodium borohydride. Tetrahydroiso-α-acids, on the other hand, are invariably made via catalytic reduction using a precious metal catalyst, commonly palladium on carbon, and hydrogen gas. Several different processes for the production of tetrahydroiso-α-acids have been described, and the starting material may be α-acids, iso-α-acids or even β-acids (substances that form an analogous sequence of compounds to the α-acids, but contribute little to the beer in normal brewing). Hexahydroiso-α-acids are prepared either by catalytic hydrogenation of p-iso-α-acids, or else by chemical reduction of tetrahydroiso-α-acids using an alkali metal borohydridc. Tetrahydroiso-α-acids are substantially more bitter than are iso-α-acids; hexahydroiso-α-acids are also more bitter, but rather less so, while p-iso-α-acids are actually less bitter. In terms of foam enhancement, when compared on an equivalent bittering basis hexahydroiso-α-acids are generally considered the most effective, followed by the tetrahydroiso-α-acids. The iso-α-acids and p-iso-α-acids have similar, but substantially less foam enhancing effects when compared in this way. Worldwide, the particular combination of bittering and foam stabilising properties shown by the tetrahydroiso-α-acids has made this form of reduced iso-α-acid especially popular, either as a partial replacement for normal iso-α-acids in the production of beers having improved foam characteristics or for the brewing of light-stable beers.

Because they are sufficiently soluble in wort, p-iso-α-acids are often used via direct addition to the kettle as well as by addition to beer. Commonly, like iso-α-acids, they are available commercially as an aqueous, slightly alkaline solution at about 30% strength. Such solution is normally used, as are corresponding solutions of iso-α-acids, by dilution into demineralized water and subsequent injection into beer, though it is possible to make direct injections of the product itself if steps are taken to ensure sufficiently vigorous and rapid mixing. A concentrated form of this product is also available, in which the p-iso-α-acids are also in the potassium salt form, but at about 60% concentration. Such a composition is described in our co-pending U.S. provisional patent application No. 60/215,408, filed June 30, 2000. Tetrahydro- and, particularly, hexahydroiso-α-acids are inherently less soluble than are iso-α-acids and p-iso-α-acids. For this reason, tetrahydroiso-α-acids are commonly sold as a 10%, slightly alkaline aqueous solution of their potassium salts. Similarly, preparations of hexahydroiso-α-acids are also sold as relatively dilute solutions. In the case of the tetrahydroiso-α-acids, Ting, in U.S. Patent 5,874,633, described an improved manufacturing process whereby an aqueous, alkaline solution having a concentration of up to 45% could be obtained. However, Ting also reported (in column 4, lines 1-7) that, though the effect was reversible, this single phase solution would soon separate into two phases of distinctly different composition at temperatures below 28°C. Thus it may be expected that in most instances Ting's solution would not be physically stable when stored at ambient temperatures, and certainly not at the lower temperatures of a brewery cellar or coldstore. Clearly, it is inconvenient and more costly to use dilute or non-homogeneous solutions, and for this reason John Paul Maye in U.S. Patents 5,583,262 & 5,624,701 describes the preparation of dry salts of isomerized and reduced isomerized α-acids, which he claims to enable a reduction of costs because of the greatly reduced weight of material requiring to be shipped to the customer. However, it is obvious that the provision of dry, crystalline or powdery substances containing less than 2% moisture (as is indicated by Maye) requires extra work to be done in the brewery, since the materials must first be weighed out and then dissolved into water before they can be used. Furthermore, Maye's process

for the production of these salts requires one to start with an aqueous solution of the iso-α-acids or reduced iso-α-acids, the water being subsequently removed by any one of a number of different methods. It is one of the further advantages of our invention to provide a means whereby such isomerized substances can be converted into highly concentrated yet fluid and readily useable forms from their free acid state without the need first to prepare such relatively dilute solutions, such forms being conveniently used to bitter wort or beer in ways that are described in our U.S. patent 6,748,849 and divisional Application Serial No. 10/247,122. Many brewers prefer to add bittering compounds to their worts rather than to the subsequent beer, because in this way they obtain some useful protection from Gram positive spoilage organisms whose activity is inhibited in the presence of isomerized α-acids of all types. However, direct addition of either tetrahydro- or hexahydro-iso-α-acids to the brewery kettle is not recommended, though may be occasionally practised, since the poor solubility of these compounds results in excessive losses due to precipitation into the trub. Nevertheless, it is an additional benefit of our invention that the concentrated products whose manufacture we describe are also particularly suitable for addition to the kettle, should the brewer so desire.

It is common practice when making a light-stable beer to use both ρ-iso-α-acids and tetrahydroiso-α-acids or hexahydroiso-α-acids as the bittering agents, the normal reason being to avoid producing a beer of the correct bitterness but that has an excessively stable foam. In U.S. Patent 5,200,227, Guzinski & Stegink describe the production of stable, single phase, aqueous solutions of mixtures of two or more different types of isomerized α-acids. By means of preparing such mixtures, Guzinski & Stegink demonstrated that the amounts of tetrahydro- or hexahydroiso-α-acids that could be held in solution could be increased above the individual solubility limits of these types of compounds when prepared as aqueous alkaline solutions by themselves. This phenomenon was ascribed to an unexpected cosolvent effect. However, these authors also showed that, above certain limits, such mixtures were not physically stable and would form two phases, stating (in column 6, lines 30-34) that " ....... there is an upper limit of concentration, at which the cosolvent effect is inoperative. This limit, for practical purposes, is about 45% by volume, and preferably the preparations are between 25% and 40% by volume in total concentration of iso-α-acids". Surprisingly, we have discovered that we are in fact able to readily prepare mixtures of different types of isomerized α-acids at much higher concentrations that are nonetheless homogeneous, have fluidity and therefore ideally suited to the working of our invention.

In our aforesaid U.S. Patent 6,748,849 and Application Serial No. 10/247,122 we describe a process for the preparation of a homogenous, fluid and resinous single phase ready-to-use concentrate of iso-α-acids by taking iso-α-acids in their naturally acidic and resinous form, heating until mobile and blending into them in a concentrated, aqueous, preferably near saturated, alkali metal hydroxide solution. By this means, we find that we can prepare the alkali metal salt of the isoinerized α-acids in a highly concentrated, essentially homogeneous, and yet fluid form. A small amount of water also may be added in order to standardise the product and/or to reduce its viscosity at ambient temperature such that it remains fluid, but insufficient to cause practically significant separation of aqueous and resinous phases.

The concentrate may then be directly injected into wort or beer, using apparatus as described in our aforesaid patent and pending application.

WO 02/02732 A1 discloses a process for the preparation of substantially homogenous, fluid and resinous concentrates of isomerized α-acids having a total concentration of such acids of not less than about 50 % by weight and in which the acids are substantially in the form of their alkali metal salts and contain water sufficient to prevent solidification, which process includes the steps of providing a concentrated preparation of isomerized α-acids in their free acid states; heating said isomerized α-acids preparation to reduce its viscosity; and with vigorous mixing, adding a saturated, or near saturated, aqueous solution of an alkali metal hydroxide in an amount sufficient to neutralize at least 70 % of the acidity of the isomerized α-acids. Water can be added during or following the addition of the alkali metal hydroxide.

WO 97/33971 A1 discloses a composition comprising a mixture of irregularly-shaped particles of compounds selected from potassium salts of dihydro iso-α-acids (DHIA) and potassium salts of hexahydro iso-α-acids (HHIA) in a liquid at least partially aqueous alkaline solution of potassium salts of the corresponding DHIA or HHIA, which solution is non-supersaturated with respect to the potassium salts of DHIA or potassium salts of HHIA present therein, the size of the particles on their greatest dimension being not more than 250 μm. The composition may contain at least one solvent selected from glycerin and propylene glycol.

According to the invention, a process for the preparation of substantially homogenous, fluid and resinous concentrates of isomerized α-acids having a total concentration of such acids of not less than 50 % by weight and in which the acids are substantially in the form of their alkali metal salts comprises the steps of:

(a) providing a concentrated preparation of isomerized α-acids in their free acid state;

(b) heating said isomerized α-acids preparation to reduce its viscosity and

(c) with mixing, adding a saturated, or near saturated, aqueous solution of an alkali metal hydroxide in an amount sufficient to neutralize at least 70 % of the acidity of the isomerized α-acids;

wherein the process is characterized by adding a food compatible viscosity reducer in the form of a low molecular weight alcohol selected from ethanol, 2-propanol or isoamyl alcohol, a low molecular weight dihydric or polyhydric alcohol selected from propylene glycol or glycerol, a low molecular weight ketone selected from acetone, or a low molecular weight ester selected from ethyl acetate, in or following step (a) or in or following step (b) or in or following step (c), and is further characterized by the step of adding water before, during or following step (c), in an amount sufficient to bring the total amount of water of the preparation to 3 to 10% by weight, without inducing a phase separation of the preparation.

The present invention provides improvements to the concentrates formed in accordance with our aforesaid patent and pending application. More particularly, in accordance with the present invention, we add a small amount of a viscosity reducer during preparation of the iso-α-concentrates, so as to discourage any degree of separation of an aqueous phase from the concentrate on storage, such substance being food compatible and therefore safe to add to a wort or beer. By viscosity reducer we mean any organic compound or mixture of compounds that exhibits the above-mentioned chemical and physical properties as a component of an improved iso-concentrate according to claim 1. Preferably the presence of the viscosity reducer also improves the dispersion of the iso-concentrate into water when used in the dosing apparatus of US Patent No. 6,748,849.

Various compounds are available commercially and advantageously may be used as additives, either singly or as mixtures, in accordance with the present invention. Particularly preferred compounds include low molecular weight alcohols such as ethanol, 2-propanol, isoamyl alcohol, dihydric alcohols such as propylene glycol (1,2-propanediol), polyhydric alcohols such as glycerol (1,2,3-propanetriol), low molecular weight ketones such as acetone, and esters such as ethyl acetate. While low molecular weight alcohols such as methanol and ethylene glycol would reduce viscosity, they cannot be used since they are poisonous and cannot be safely added to the wort or beer.

A further benefit of the incorporation of viscosity reducer into iso-concentrate is an improvement in dispersion and dissolution when the concentrate is added directly to wort or beer, this improvement leading to a beneficial increase in the utilization of the iso-α-acids into the beer. Especially, this improvement is more likely when the viscosity improver is either totally miscible with the wort or beer or highly soluble therein.

The invention will be further described with reference to the accompanying drawings, wherein like numerals depict like parts, and wherein:

Fig. 1 shows the effect of addition of 5 wt% of propylene glycol to a tetra concentrate made in accordance with the present invention;

Fig. 2 shows the relationship of the pH (as measured in a 2% aqueous iso-α-acids solution) and the viscosity of tetra concentrate prepared using potassium hydroxide (KOH); and

Fig. 3 shows the reduction in the viscosity of tetra concentrate that is effected by the addition of various viscosity reducing agents.

Iso-α-concentrates are prepared from iso-α-acids or reduced iso-α-acids in their free acid, resinous state, following the teachings of our aforesaid U.S. Patent No. 6,748,849. This is achieved by first heating the acids to about 40 - 80°C until conveniently fluid, vigorously stirring this mobile resin and slowly adding a calculated, near equimolar amount of suitably concentrated, preferably near-saturated, aqueous solution of an alkali metal hydroxide until a homogeneous, still fluid product is formed. Optionally, or sometimes of necessity, a small amount of water may be added before, during or after the addition of the alkali, but insufficient to cause the formation of separate phases in the final product. The mixture is then cooled to ambient. This addition of water is intended to bring the concentration of the product to a convenient, standardized value and/or may be added for the purpose of reducing its viscosity such that it is still sufficiently mobile to allow for easy use in dosing apparatus such as described in our aforesaid patent and application. This concentration of iso-α-acids or reduced iso-α-acids clearly will be dependent upon the concentration and type of the alkali metal hydroxide solution used, and the amount (if any) of added water, but in any case should not be less than about 50% by weight. Potassium hydroxide solution at about 45% (w/w) is particularly favored as the neutralizing hydroxide, though other alkali metal hydroxides can be employed. Ideally, sufficient neutralizing hydroxide should be added to completely (100%) neutralize the acids, but not much above that, though a satisfactory product is possible in some cases at between 70 and 100%. On the other hand, excessive addition of hydroxide solution is to be avoided as it may lead to chemical instability. In most cases, the addition of alkali metal hydroxide solution should be such as to lead to a solution pH of between 5 and 12, most commonly between 7 and 11, when the product is dissolved into demineralized water at about 2% volume strength of the iso-α-acids or reduced iso-α-acids. The point at which addition of water is not possible without inducing a significant phase separation will depend on several factors and will vary according to the particular resin and the amount, type and strength of the added alkali. Hence, other than by experiment, it is not possible to determine exact limits for the maximum amount of water that can be tolerated in any particular type of product. In principle, the minimum possible amount of water will, of course, be determined by the strength of the alkali metal hydroxide solution and the degree of neutralization, but typically will not be less than about 3% by weight. However, at such low moisture content it is likely that the resin would be virtually solid and unsuitable for use. Consequently, it would then be

necessary to add water, most probably to bring the moisture content to from 3 to 10% by weight.

In accordance with the present invention, an additive compound for reducing viscosity and preventing separation of an aqueous phase on storage is also added at one or more stages in the preparation of the concentrate. The amount of additive can be small, typically 1 - 10 % by weight, preferably 3 - 8 %, more preferably about 5 % by weight. The addition may be at any stage during the preparation of the concentrate. However, more volatile compounds such as the lower alcohols and ethyl acetate preferably are added after the concentrate is cooled.

Mixtures of two or more types of iso-α-acids may either be made by mixing the appropriate amounts of the free acid resins and then neutralizing and optionally diluting as described above, or by blending already formed preparations of the individual types of iso-α-acids. In these cases, the total amount of iso-α-acids of all types should be no less than about 50% by weight and the blend must also be such that it is homogeneous and does not undergo phase separation under normal storage conditions.

The effective working of our entire invention is naturally dependent upon the provision of suitable iso-α-acids concentrate preparations and this aspect of our invention is more readily made apparent through the following examples.

The overall procedure was as follows:

A tetrahydroiso-α-acids concentrate was prepared following the teachings of our aforesaid parent patent application.

For all the samples listed below, a tetra free acid comprising 90.6% tetra by HPLC, was warmed to about 30-31 °C, stirred at 450 rpm and then 45% or 50% (w/w) KOH was added all at once and stirring was continued for about 12 minutes. The mixture was then cooled to ambient. The less volatile compounds (propylene glycol (PG) and glycerol) were added to the tetra (free acid form) before addition of the KOH. The more volatile compounds (acetone, alcohols and ethyl acetate) were stirred with the tetra concentrate after cooling to 25-30 °C.

Viscosity Determinations using Falling Ball Viscometer:

A Gilmont Falling Ball Viscometer was calibrated with glycerol and the supplied stainless steel ball. The viscosity constant, K, was determined using the equation:

$$K = \mu/[(\rho_B - \rho) \times t]$$

where:

$\mu$ = viscosity in centipoises (cP)
$\rho_B$ = density of ball in g/mL (8.02 for stainless steel)
$\rho$ = density of liquid in g/mL
t = time of descent (minutes)

Samples were added to the glass viscometer in a water bath equilibrated at a constant temperature, measured to within 0.1 °C. The stainless steel ball was dropped into the viscometer and the time to fall between the fiducial lines was recorded.

At 30°C the viscosity of glycerol is 629 cP and it took 2.30 minutes for the stainless steel ball to fall between the fiducial lines. Using a density of glycerol of 1.261 g/mL, K = 40.4. Using this value the viscosity of the iso-concentrates was determined using the following equation:

$$\mu = K \times (\rho_B - \rho) \times t = 40.4 \times (8.02 - \rho) \times t$$

Results

In the absence of any additive, the tetra concentrate samples made using 45% KOH had a viscosity that was 44% less than the samples made using 50% KOH; see Figure 1 and Table 1. With increasing pH there was a slight decrease in viscosity of tetra concentrate as shown in Figure 2. Addition of 5 wt% of propylene glycol (PG) to tetra concentrate caused about 40% reduction in viscosity in the concentrate made using 50% KOH; see Figure 1 and Table 1. Glycerol was not nearly as effective in reducing the viscosity of tetra concentrate (by 17%), presumably due to the greater viscosity of glycerol than PG.

Acetone caused the greatest decrease in viscosity of tetra concentrate among the compounds tested, reducing

viscosity by 68% at 5 wt% in tetra concentrate made using 45% KOH; see results in Figure 3 and Table 1. Other compounds decreased viscosity of tetra concentrate at 5 wt% as shown in Figure 3. The decrease in viscosity of tetra concentrate by these various compounds followed the decrease in the viscosity of the pure compounds themselves as listed in Table 2. Surprisingly though, some low molecular weight, relatively low viscosity compounds (also shown in Table 2) that are otherwise compatible with the iso-concentrates actually cause an increase in viscosity. For example, the carboxylic acid butyric acid caused a substantial increase in the viscosity of tetra concentrate (Table 1). Acetic acid (not shown) was even worse, causing an approximate 80-fold increase in viscosity at 4.5% addition level.

5 wt% of PG caused a 26% reduction in viscosity of rho concentrate, a 29% reduction for isoconcentrate and a 34% reduction for a rho/tetra concentrate (rho/tetra of 2.0). The rho/tetra sample with 5 wt% PG was transparent, while in the absence of PG it was opaque.

Table 1. Viscosities of various isoconcentrates at 50 °C as determined using a Gilmont falling ball viscometer.

| Concentrate Type | % Conc. of KOH used | Additive | Wt% Additive | pH* | Viscosity cP | % of Compound |
|---|---|---|---|---|---|---|
| Tetra | 45 | None | --- | 7.0 | 500 | 67.9 |
| | | | --- | 8.2 | 498,509 | 68.1 |
| | | | --- | 9.2 | 477 | 67.8 |
| | | | --- | 10.0 | 478 | 68.6 |
| | | Acetone | 5.0 | 9.9 | 168 | 64.9 |
| | | Ethanol^ | 5.0 | 9.2 | 200 | 65.0 |
| | | 2-Propanol | 5.0 | 9.3 | 240 | 65.0 |
| | | Isoamyl alcohol | 5.0 | 10.1 | 253 | 65.2 |
| | | PG | 5.0 | 8.2 | 326 | 64.6 |
| | | | 7.5 | 8.1 | 269 | 62.5 |
| | | Ethyl Acetate | 5.0 | 9.2 | 210 | 65.8 |
| | | Butyric acid | 3.7 | 9.8 | 2155 | 60.7** |
| | | | | | | |
| | | | | | | |
| | | | | | | |
| | 50 | None | --- | 7.9 | 883 | 70.5 |
| | | | --- | 7.9 | 915 | 70.0 |
| | | PG | 5.0 | 7.8 | 533 | 66.1 |
| | | Glycerol | 5.0 | 8.9 | 743 | 66.2 |
| | | Ethanol^ | 5.0 | 7.7 | 300 | 67.3 |
| Rho | 45 | None | --- | 9.1 | 352 | 60.1 |
| | | PG | 5.0 | 9.0 | 262 | 57.5 |
| Rho/Tetra blend | 45/50 | None | --- | 9.0 | 495 | 42.6 (Rho)<br>21.2 (Tetra) |
| | | PG | 5.0 | 9.0 | 329 | 40.9 (Rho)<br>20.5 (Tetra) |

(continued)

| Concentrate Type | % Conc. of KOH used | Additive | Wt% Additive | pH* | Viscosity cP | % of Compound |
|---|---|---|---|---|---|---|
| Iso | 45 | None | --- | 7.9 | 248 | 69.2 |
| | | PG | 5.0 | 8.0 | 176 | 65.8 |
| *pH was determined at 10% for tetra, 35% for rho, 30% for iso and 20% rho for rho/tetra samples.<br>^ 95% ethanol (Everclear) was used.<br>** Aqueous phase separation made representative sampling difficult; a tantalum ball was used to determine viscosity. | | | | | | |

Table 2. Viscosity of various compounds.

| Compound | Class | Temp. (°C) | Viscosity (cP) |
|---|---|---|---|
| Acetone | Ketone | 20 | 0.33 |
| Ethyl acetate | Ester | 20 | 0.45 |
| Ethanol | Alcohol | 20 | 1.20 |
| Acetic acid | Carboxylic acid | 20 | 1.3 |
| Butyric acid | Carboxylic acid | 20 | 1.54 |
| 2-Propanol | Alcohol | 20 | 2.5 |
| Isoamyl alcohol | Alcohol | 10 | 6.2 |
| | | 20 | 5.1* |
| PG | Alcohol (dihydric) | 22 | 48 |
| Glycerol | Alcohol (trihydric) | 20 | 1490 |
| * Estimated using temperature dependence of viscosity of n-butanol. | | | |

## Claims

1. A process for the preparation of substantially homogeneous, fluid and resinous concentrates of isomerized $\alpha$-acids having a total concentration of such acids of not less than 50% by weight and in which the acids are substantially in the form of their alkali metal salts, comprising the steps of:

   (a) providing a concentrated preparation of isomerized $\alpha$-acids in their free acid states;
   (b) heating said isomerized $\alpha$-acids preparation to reduce its viscosity; and
   (c) with mixing, adding a saturated, or near saturated, aqueous solution of an alkali metal hydroxide in an amount sufficient to neutralize at least 70% of the acidity of the isomerized $\alpha$-acids; **characterized by** adding a food compatible viscosity reducer in the form of a low molecular weight alcohol selected from ethanol, 2-propanol or isoamyl alcohol, a low molecular weight dihydric or polyhydric alcohol selected from propylene glycol or glycerol, a low molecular weight ketone selected from acetone, or a low molecular weight ester selected from ethyl acetate, in or following step (a) or in or following step (b) or in or following step (c); and further **characterized by** the step of adding water before during or following step (c), in an amount sufficient to bring the total amount of water of the preparation to 3 to 10% by weight, without inducing a phase separation of the preparation.

2. The process of claim 1, **characterized in that** the viscosity reducer is added in an amount of 1 - 10% by weight.

3. The process of claim 1, **characterized in that** the viscosity reducer is added in an amount of 3 - 8% by weight.

4. The process of claim 1, **characterized in that** the viscosity reducer is added in an amount of 5% by weight.

5. The concentrated preparation of isomerized $\alpha$-acids prepared by the process of claim 1.

## Patentansprüche

1. Verfahren zur Herstellung im Wesentlichen homogener, fluider und harzartiger Konzentrate isomerisierter α-Säuren, die eine Gesamtkonzentration an solchen Säuren von nicht weniger als 50 Gew.-% haben und bei denen die Säuren im Wesentlichen in Form ihrer Alkalimetallsalze vorliegen, mit den Schritten, bei denen:

    a) eine konzentrierte Zubereitung isomerisierter α-Säuren im Zustand ihrer freien Säuren bereitgestellt wird,
    b) die Zubereitung isomerisierter α-Säuren erhitzt wird, um ihre Viskosität zu verringern; und
    c) unter Mischen eine gesättigte oder beinahe gesättigte wässrige Lösung eines Alkalimetallhydroxids in einer zur Neutralisierung von mindestens 70% der Azidität der isomerisierten α-Säuren ausreichenden Menge zugegeben wird, **gekennzeichnet durch** die Zugabe eines lebensmittelverträglichen Viskositätsminderers in Form eines aus Ethanol, 2-Propanol oder Isoamylalkohol ausgewählten Alkohols mit niedrigem Molekulargewicht, eines aus Propylenglykol oder Glycerin ausgewählten zweiwertigen oder mehrwertigen Alkohols mit niedrigem Molekulargewicht, eines aus Aceton ausgewählten Ketons mit niedrigem Molekulargewicht oder eines aus Ethylacetat ausgewählten Esters mit niedrigem Molekulargewicht in oder nach Schritt a) oder in oder nach Schritt b) oder in oder nach Schritt c), und ferner **gekennzeichnet durch** den Schritt, bei dem vor, während oder nach Schritt c) Wasser in einer Menge zugegeben wird, die ausreicht, um die Wassergesamtmenge der Zubereitung auf 3 bis 10 Gew.-% zu bringen, ohne eine Phasenentmischung der Zubereitung hervorzurufen.

2. Verfahren nach Anspruch 1, **dadurch gekennzeichnet, dass** der Viskositätsminderer in einer Menge von 1 bis 10 Gew.-% zuzugeben wird.

3. Verfahren nach Anspruch 1, **dadurch gekennzeichnet, dass** der Viskositätsminderer in einer Menge von 3 bis 8 Gew.-% zuzugeben wird.

4. Verfahren nach Anspruch 1, **dadurch gekennzeichnet, dass** der Viskositätsminderer in einer Menge von 5 Gew.-% zuzugeben wird.

5. Konzentrierte Zubereitung isomerisierter α-Säuren, die durch das Verfahren nach Anspruch 1 hergestellt ist.

## Revendications

1. Procédé pour la préparation de concentrés sensiblement homogènes, fluides et résineux d'acides α isomérisés présentant une concentration totale de tels acides qui n'est pas inférieure à 50 % en poids et dans lesquels les acides sont sensiblement sous forme de leurs sels de métal alcalin, comprenant les étapes suivantes :

    (a) fournir une préparation concentrée d'acides α isomérisés dans leurs états d'acide libre ;
    (b) chauffer la préparation d'acides α isomérisés afin de réduire sa viscosité ; et
    (c) ajouter, en mélangeant, une solution aqueuse saturée ou pratiquement saturée d'un hydroxyde de métal alcalin dans une quantité qui est suffisante pour neutraliser au moins 70 % de l'acidité des acides α isomérisés, **caractérisé par** l'ajout d'un agent réducteur de viscosité compatible avec l'usage alimentaire sous la forme d'un alcool à faible poids moléculaire choisi parmi l'éthanol, le 2-propanol ou un alcool isoamylique, d'un dialcool ou d'un alcool polyvalent à faible poids moléculaire chois parmi le propylène glycol ou le glycérol, d'un cétone à faible poids moléculaire tel que l'acétone, ou d'un ester à faible poids moléculaire tel que l'acétate d'éthyle pendant ou après l'étape (a) ou pendant ou après l'étape (b) ou pendant ou après l'étape (c), et en outre **caractérisé par** l'étape dans laquelle de l'eau est ajoutée avant, pendant ou après l'étape (c) dans une quantité qui est suffisante pour amener la quantité totale d'eau de la préparation à 3 à 10 % en poids sans induire de phase de séparation de la préparation.

2. Procédé selon la revendication 1, **caractérisé en ce que** l'agent réducteur de viscosité est ajouté dans une quantité de 1 à 10 % en poids.

3. Procédé selon la revendication 1, **caractérisé en ce que** l'agent réducteur de viscosité est ajouté dans une quantité de 3 à 8 % en poids.

4. Procédé selon la revendication 1, **caractérisé en ce que** l'agent réducteur de viscosité est ajouté dans une quantité de 5 % en poids.

**5.** Préparation concentrée d'acides α isomérisés préparée selon le procédé de la revendication 1.

Figure 1. Effect of PG on Viscosity of tetra concentrates

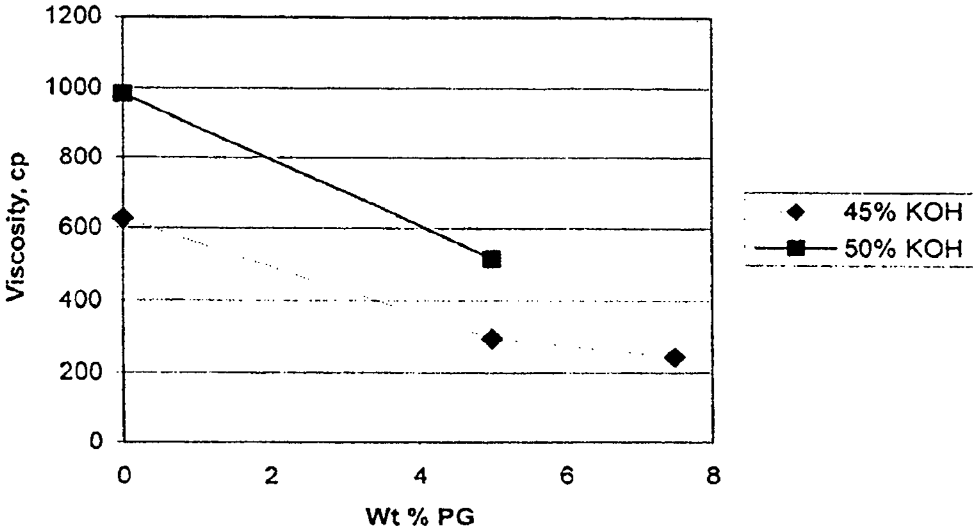


Figure 2. Effect of pH on Viscosity of Tetra Concentrate

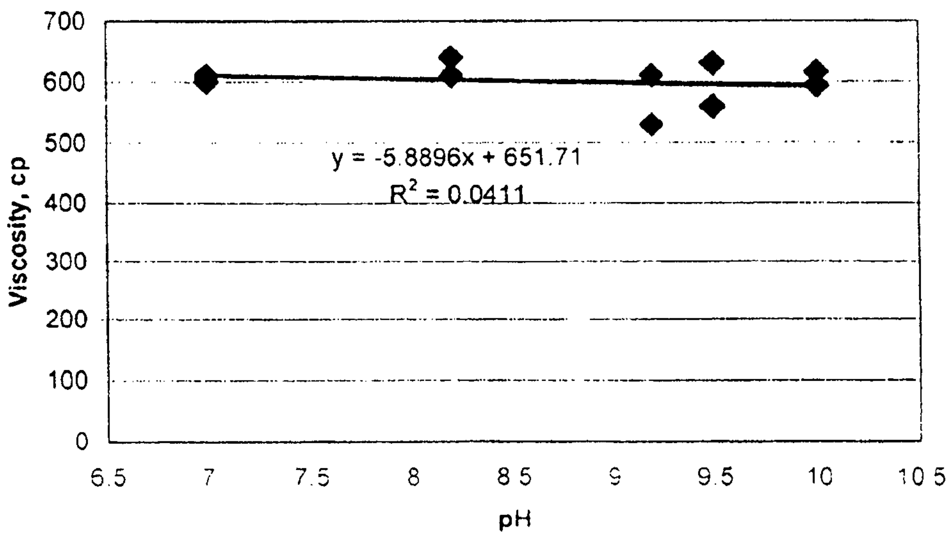

Figure 3. 5 Wt% of Compounds on Viscosity of Tetra Concentrate

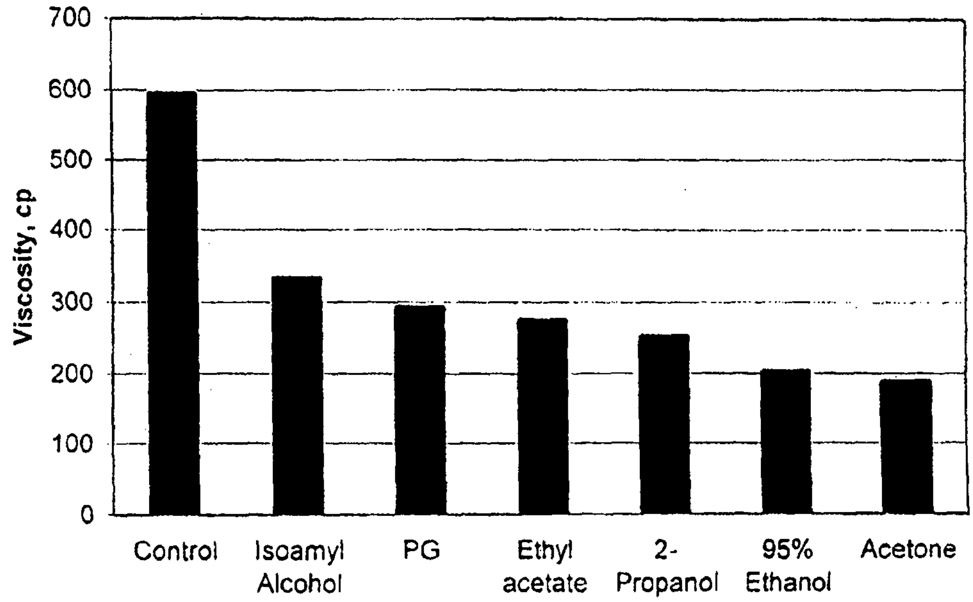

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 21540800 P
- US 5874633 A
- US 5583262 A
- US 5624701 A
- US 6748849 B
- US 10247122 B
- US 5200227 A, Guzinski & Stegink
- WO 0202732 A1
- WO 9733971 A1